# EUROPEAN PATENT SPECIFICATION

(11) **EP 0 497 628 B1**
(45) Date of publication and mention of the grant of the patent: **06.08.1997**
(21) Application number: 92300869.2
(22) Date of filing: 31.01.1992
(51) Int. Cl.: G06F 13/26, G06F 13/24, G06F 15/16

(54) **Interrupt controller for a multiprocessor computer system**
Unterbrechungssteuerung für ein Multiprozessor-Rechnersystem
Dispositif de commande d'interruption pour un système d'ordinateur multiprocesseur

(30) Priority: 31.01.1991 JP 32150/91
(43) Date of publication of application: 05.08.1992
(73) Proprietor: NEC CORPORATION, Tokyo (JP)
(72) Inventor: Kurihara, Nobumasa, c/o NEC Corporation, Minato-ku, Tokyo (JP)
(74) Representative: Orchard, Oliver John

(56) References cited:
- US-A- 4 080 649
- PATENT ABSTRACTS OF JAPAN vol. 12, no. 93 (P-680)(2940) 26 March 1988 & JP-A-62 226 249
- PATENT ABSTRACTS OF JAPAN vol. 5, no. 185 (P-91)(857) 25 November 1981 & JP-A-56 111 951
- PATENT ABSTRACTS OF JAPAN vol. 13, no. 250 (P-882)(3598) 12 June 1989 & JP-A-01 048 160

## Description

This invention relates to a multiprocessor circuit having a plurality of CPUs, and particularly to a multiprocessor circuit intended for the improvement of the throughput by controlling the input of interruption signals to each CPU.

A conventional multiprocessor circuit having a plurality of CPUs has its CPUs connected in parallel in relation to an interruption signal line for inputting interruption signals. It receives interruption signals input from the interruption line with one of the CPUs for processing.

In such a multiprocessor circuit with the configuration described above, there is no clear rule for the distribution of interruption signals among CPUs. Therefore, a particular CPU sometimes receives an extremely large number of interruption signals and is placed under much heavier load than others.

This prolongs the processing time of such a CPU and results in a lower throughput of the whole multiprocessor circuit.

In Patent Abstracts of Japan, Vol. 12, No. 93 (P-680) [2940] dated March 26 1988, and in the specification of Japanese patent application number 61-70447, which was published under 62-226249 on October 5 1987, there was proposed a system including a central processing unit having a monitor task program which monitored an interruption produced by an input/output device via an input/output control and a replacement task program which added 1 to an interruption frequency register area of a memory every time that an interruption was produced. The program compared the allowed interruption occurring frequency registered with an allowable value register area with the interruption occurring frequency registered to the register area at the prescribed time intervals registered to a prescribed time register area of the memory. If the latter occurring frequency was higher than the former one, the input/output device was separated from the system to prevent the occurrence of interruptions.

A feature of an arrangement to be described below, as an example, is that it distributes the interruption signals equally to all of the CPUs. In other words, the interruption signals are not concentrated at a particular CPU, thereby improving the throughput of the whole multiprocessor circuit.

A multiprocessor circuit which will be described below by way of example, in illustration of the invention has a plurality of CPUs connected in parallel in relation to an interruption line for inputting interruption signals, and interruption restriction circuits connected between the interruption line and each CPU. The interruption restriction circuit disables the input of the interruption signals to the corresponding CPU for a certain period of time when that CPU has received more interruption signals than are specified during a predetermined time period.

In one particular embodiment to be described below and illustrative of the invention, the interruption restriction circuit includes a counter to count the number of interruption signals received by the corresponding CPU, a timer to keep time for the counting by the counter, and an input disabling means to prohibit the input of the interruption signals to the corresponding CPU for a certain period of time.

In yet another embodiment illustrative of the invention to be described below, the input disabling means includes a delay circuit to hold the input of the interruption signals from the interruption line for a certain period of time, and a switching circuit to switch the connection from the above interruption line to the above delay circuit when the value counted by the above counter means exceeds the specified value. These delay and switching circuits may be replaced by a keying circuit to turn on and off the input from the interruption line.

In a further arrangement, illustrative of the invention and to be described below, the interruption restriction circuit includes a counter to count the number of the interruption signals received by the corresponding CPU, an input disabling means to disable the input of the interruption signals to the particular CPU for a certain period of time when the value counted by the counter reaches a predetermined value and a timer to keep the time for the counting by the counter and of the disabling by the input disabling means.

Yet another arrangement, illustrative of the invention and to be described below by way of example, includes a plurality of CPUs connected in parallel in relation to the interruption line for inputting the interruption signals, and interruption restriction circuits connected between the interruption line and each of the CPUs. The interruption restriction circuit includes a counter to count the number of the interruption signals received by each CPU, a timer to keep the time for the counting by the counter, and an input disabling means to disable the input of the interruption signals to the applicable CPU for a certain period of time, the input disabling means being provided with a switching circuit to switch the connection from the interruption line directly to the CPU, or to the delay circuit to hold the input of the interruption signals for a certain period of time. The switching circuit is designed to switch the connection from the interruption line to the delay circuit when the value given by the counter exceeds a fixed number.

The following description and drawings disclose, by means of examples, the invention which is characterised in the appended claims, whose terms determine the extent of the protection conferred hereby.

In the drawings:-
Fig. 1 is a block schematic circuit diagram showing the configuration of a multiprocessor circuit,
Fig. 2 is a block schematic circuit diagram showing the internal configuration of an interruption restriction circuit for use in the multiprocessor circuit of Fig.1,
Fig. 3 is a flowchart showing the operation of the interruption restriction circuit of Fig. 2,
Fig. 4 is a timing chart illustrating the reception of the interruption signals by each CPU in the multiprocessor circuit of Fig. 1,
Fig. 5 shows waveforms illustrating the timing of the signals in the interruption restriction circuit, and
Fig. 6 is a block schematic circuit diagram showing the internal configuration of an interruption restriction circuit of another multiprocessor circuit.

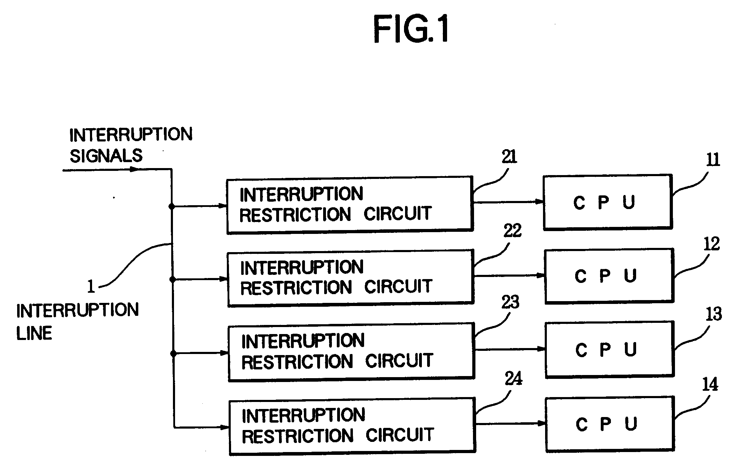

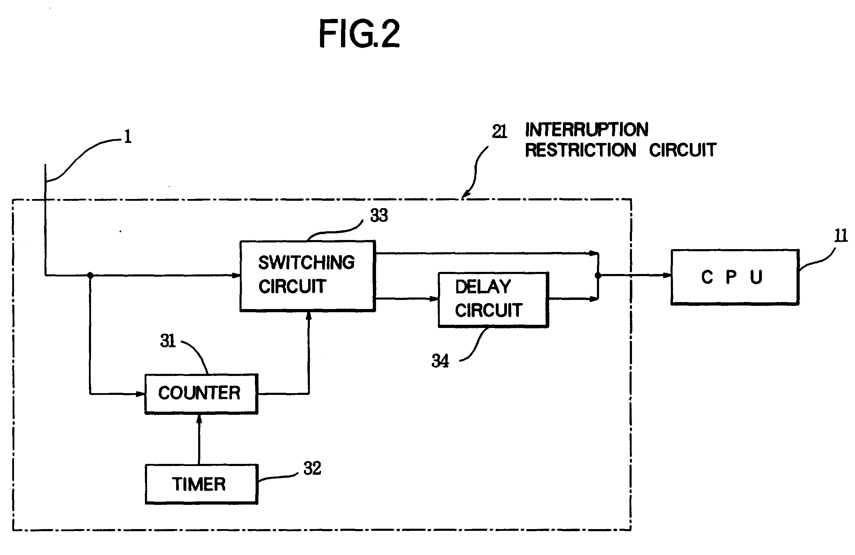

Referring to the drawings, Fig. 1 shows the configuration of a multiprocessor circuit of a first embodiment illustrative of the invention. In Fig. 1, the multiprocessor circuit in this embodiment has four CPUs (Central Processing Units) 11 to 14 connected in parallel with the interruption line 1 for inputting interruption signals and interruption restriction circuits 21 to 24 connected to the input sides of the CPUs 11 to 14. Fig. 2 shows the configuration of these interruption restriction circuits 21 to 24. Since the interruption restriction circuits 21 to 24 have the same configuration, the interruption restriction circuit 21 is illustrated here as a representative.

The interruption restriction circuit 21 has a counter 31 to count the number of received interruption signals, a timer 32 to keep time for counting by the counter 3, a switching circuit 33 to switch the connection according to the counting result at the counter 31 and a delay circuit 34 to hold the input of interruption signals for a certain period of time. The switching circuit 33 may be connected to CPU 11 via a signal line 36 or a delay circuit 34. The switching circuit 33 selects either of the signal line 36 or the delay circuit 34 to input the interruption signals to CPU 11 via the signal line 36 or to the delay circuit 34 and then CPU 11. The counter 31 is given a certain count value and activates the switching circuit 33 when the value counted by the counter 31 exceeds that value. Further, the timer 32 is in advance given time for counting by the counter 31 and delay time for the delay circuit 34.

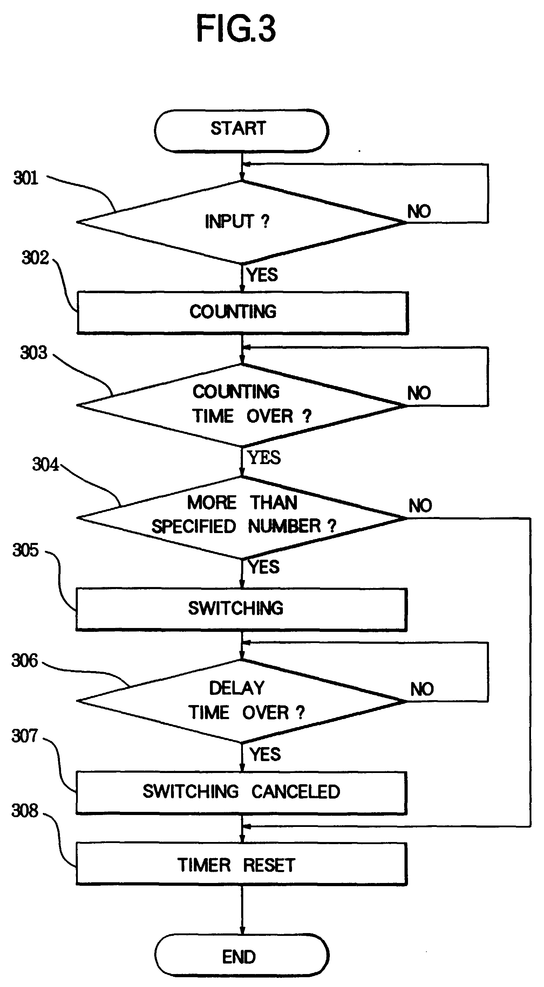

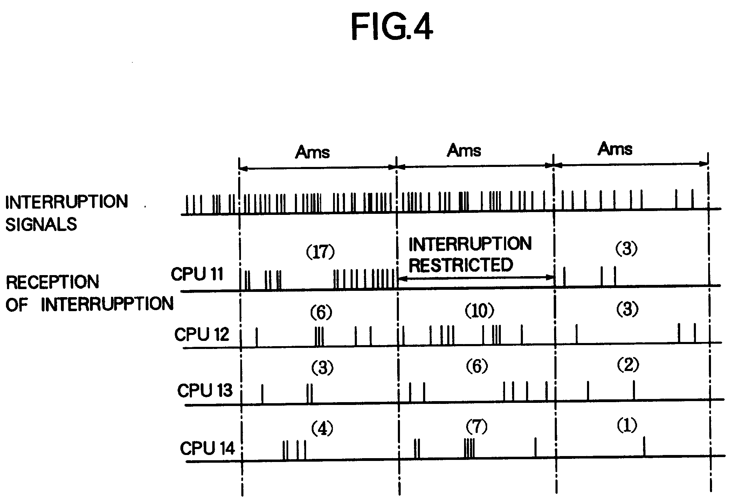

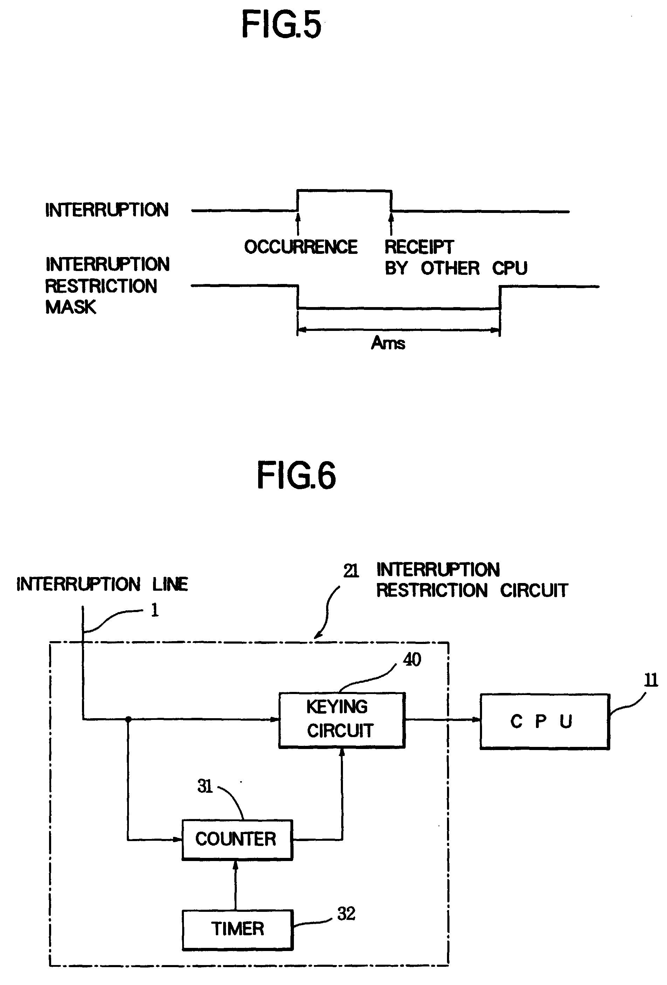

Next, referring to the flowchart of Fig. 3 and timing charts of Figs. 4 and 5, operation of the multiprocessor circuit with above configuration is described below.

Suppose here that the counter 31 of the interruption restriction circuits 21 to 24 has "16" as the count value and the timer 32 is given "A ms" as the time to be kept, and the interruption signals are input through the interruption line 1 as shown in Fig. 4. The delay time set at the delay circuit 34 is the same as the time kept by the timer 32 (A ms).

When interruption signals are input through the signal line 1 and distributed to the CPUs 11 to 14, the counter 31 at each of the interruption restriction circuits 21 to 24 recognizes the input of interruption signals (Step 301) and counts the interruption signals received by the CPUs 11 to 14 (Step 302). Then, the counter 31 judges whether the corresponding CPU has received more than 16 (predetermined value) interruption signals in a specified period of A ms (Steps 303 and 304).

If a value more than 16 is obtained from the counting above, that is, any of the CPUs has received more than 16 interruption signals, the switching circuit 33 of the interruption restriction circuit 21, 22, 23 or 24 corresponding to that CPU switches the connection to the delay circuit 34 to activate the delay circuit 34 (Step 305). As a result, during the delay time (A ms) set at the delay circuit 34, any interruption signals are not sent to the applicable CPU. During this delay time, the interruption signals are received by other CPUs.

In Fig. 4, CPU 11 counts 17 interruption signals during the first A ms. In this case, as shown in Fig. 5, the switching circuit 33 operates at the rising of the 17th interruption signal and at the same time the delay circuit 34 is activated. This causes the interruption restriction mask to operate for delay time of A ms so as to prevent interruption signals from being received by CPU 11 and distribute the interruption signals to other CPUs 12 to 14. Figures in parentheses in Fig. 4 indicate the number of interruption signals received by the CPUs 11 to 14 in A ms.

When the delay time set at the delay circuit 34 elapses (Step 306), the switching circuit 33 cancels holding by the delay circuit 34 and switches the connection to the signal line 36 (Step 307). The counter 31 is reset (Step 308) here. If the value counted by the counter 31 does not exceed 16 in A ms at the Steps 303 and 304, the operation proceeds to Step 308, where the counter 31 of the applicable interruption restriction circuit 21 is reset.

As shown above, when the number of interruption signals received by a particular CPU exceeds a fixed value, a multiprocessor circuit of the present invention restricts the reception of interruption signals by that CPU for a certain time period, causing other CPUs to receive the interruption signals. Thus, interruption signals are distributed practically equally to a plurality of CPUs. This prevents concentration of interruption signals to a particular CPU and, in turn, too long processing time at one CPU. As a result, the throughput of the whole multiprocessor circuit can be improved.

The time A ms set at the timer 32 can be changed freely. The number of interruption signals acceptable during that time can be also arbitrarily set.

Fig. 6 shows the configuration of the interruption restriction circuits 21 to 24 used in a multiprocessor circuit according to a second embodiment of the present invention. In this embodiment, the multiprocessor circuit is provided with a keying circuit 40 to turn on and off the input of interruption signals instead of the switching circuit 33 and the delay circuit 34 in Fig. 2. Other devices including the counter 31 and the timer 32 are the same as the first embodiment. The keying circuit 40 is usually turned on to connect the interruption line 1 to CPUs 11 to 14. When the counter 31 counts more than the specified value, the keying circuit 40 turns off the input of interruption signals from the interruption line 1. The duration of this disabling of interruption signal input is controlled by the timer 32. When the specified disabling time passes, the keying circuit 40 turns on again. While the input of the interruption signals is disabled by the keying circuit 40, the interruption signals are received by other CPUs as in the above embodiment.

It is needless to say that various modifications can be made to the above embodiments. For example, the time set at the timer 32 and the delay time set at the delay circuit 34 are the same (A ms) in the above embodiment, but they can be different from each other. Thus it will be understood that, although the invention has been illustrated by reference to particular embodiments, by way of example, variations and modifications thereof, as well as other embodiments may be made within the scope of the protection sought by the appended claims.

## Claims

1. A multiprocessor circuit including a plurality of CPUs (11-14) connected in parallel with an interruption line (1) for the input of interruption signals, a plurality of interruption restriction circuits (21-24), one of the interruption restriction circuits (21-24) being connected between the interruption line (1) and a corresponding one of each of the plurality of CPUs (11-14), and the interruption restriction circuits (21-24) each being capable of disabling the input of the interruption signals to the corresponding one of the CPUs (11-14) for a certain period of time when the number of interruption signals received by that CPU in a specified time exceeds a fixed number.

2. A multiprocessor circuit as claimed in claim 1, wherein the interruption restriction circuit (21-14) includes a counter (31) for counting the number of interruption signals received by the CPU (11-14), a timer (32) for keeping the time for counting by the counter (31), and an input disabling means (33,34) for disabling the input of interruption signals to the CPU (11-14) for a certain period of time when the number counted by the counter (31) exceeds a fixed number.

3. A multiprocessor circuit as claimed in claim 2, wherein the input disabling means (33,34) includes a delay circuit (34) to delay the input of the interruption signals from the interruption line (1) for a certain period of time, and a switching circuit (33) to switch the connection from the interruption line (1) to the delay circuit (34) when the value counted by the counter (31) exceeds a fixed value.

4. A multiprocessor circuit as claimed in claim 1, wherein the interruption restriction circuit (21-24) includes a counter (31) for counting the number of the interruption signals received by the CPU (11-14), an input disabling means (33,34,40) for disabling the input of the interruption signals to the CPU (11-14) for a certain period of time when the number counted by the counter (31) exceeds a fixed number, and a timer (32) for keeping the time for counting by the counter (31) and for disabling by the input disabling means (33,34).

5. A multiprocessor circuit as claimed in claim 4, wherein the input disabling means includes a keying circuit (40) to turn the input from the interruption line (1) on and off.

6. A multiprocessor circuit as claimed in claim 4, wherein the input disabling means (33,34,40) includes a delay circuit (34) to delay the input of the interruption signals from the interruption line (1) for a certain period of time, and a switching circuit (33) to switch the connection from the interruption line (1) to the delay circuit (34) when the value counted by the counter (31) exceeds a fixed value.

## Patentansprüche

1. Multiprozessor-**Schaltung,** das aufweist: mehrere Zentraleinheiten (11-14), die parallel mit einer Unterbrechungsleitung (1) zur Eingabe von Unterbrechungssignalen geschaltet sind, mehrere Unterbrechungsbegrenzungsschaltungen (21-24), wobei eine der Unterbrechungsbegrenzungsschaltungen (21-24) zwischen die Unterbrechungsleitung (1) und einer entsprechenden von jeder der mehreren Zentraleinheiten (11-14) geschaltet ist, und die Unterbrechungsbegrenzungsschaltungen (21-24) jeweils fähig sind, die Eingabe der Unterbrechungssignale an die entsprechende der Zentraleinheiten (11-14) für eine bestimmte Zeitspanne zu sperren, wenn die Anzahl der in einer vorgegebenen Zeit durch diese Zentraleinheit empfangenen Unterbrechungssignale eine festgelegte Anzahl überschreitet.

2. Multiprozessor-**Schaltung,** nach Anspruch 1, in dem die Unterbrechungsbegrenzungsschaltung (21-14) aufweist: einen Zähler (31) zur Zählung der Anzahl der durch die Zentraleinheit (11-14) empfangenen Unterbrechungssignale, einen Zeitgeber (32) zur Einhaltung der Zeit zur Zählung durch den Zähler (31), und eine Eingabesperreinrichtung (33,34) zur Sperrung der Eingabe von Unterbrechungssignalen an die Zentraleinheit (11-14) für eine bestimmte Zeitspanne, wenn die durch den Zähler (31) gezählte Anzahl eine festgelegte Anzahl überschreitet.

3. Multiprozessor-**Schaltung,** nach Anspruch 2, in dem die Eingabesperreinrichtung (33,34) aufweist: eine Verzögerungsschaltung (34), um die Eingabe der Unterbrechungssignale von der Unterbrechungsleitung (1) für eine bestimmte Zeitspanne zu verzögern, und einen Schaltkreis (33), um die Verbindung von der Unterbrechungsleitung (1) zu der Verzögerungsschaltung (34) zu schalten, wenn der durch den Zähler (31) gezählte Betrag einen festgelegten Betrag überschreitet.

4. Multiprozessor-**Schaltung,** nach Anspruch 1, in dem die Unterbrechungsbegrenzungsschaltung (21-24) aufweist: einen Zähler (31) zur Zählung der Anzahl der durch die Zentraleinheit (11-14) empfangenen Unterbrechungssignale, eine Eingabesperreinrichtung (33,34,40) zur Sperrung der Eingabe der Unterbrechungssignale an die Zentraleinheit (11-14) für eine bestimmte Zeitspanne, wenn die durch den Zähler (31) gezählte Anzahl eine festgelegte Anzahl überschreitet, und einen Zeitgeber (32) zur Einhaltung der Zeit zur Zählung durch den Zähler (31) und zur Sperrung durch die Eingabesperreinrichtung (33,34).

5. Multiprozessor-**Schaltung,** nach Anspruch 4, in dem die Eingabesperreinrichtung eine Tastschaltung (40) aufweist, um die Eingabe von der Unterbrechungsleitung (1) ein- und auszuschalten.

6. Multiprozessor-**Schaltung,** nach Anspruch 4, in dem die Eingabesperreinrichtung (33,34,40) aufweist: eine Verzögerungsschaltung (34), um die Eingabe der Unterbrechungssignale von Unterbrechungsleitung (1) für eine bestimmte Zeitspanne zu verzögern, und einen Schaltkreis (33), um die Verbindung von der Unterbrechungsleitung (1) zu der Verzögerungsschaltung (34) zu schalten, wenn der durch den Zähler (31) gezählte Betrag einen festgelegten Betrag überschreitet.

## Revendications

1. Circuit multiprocesseur comprenant une pluralité d'unités centrales de traitement (11-14) connectées en parallèle à une ligne d'interruption (1) destinée à l'entrée de signaux d'interruption, une pluralité de circuits de restriction d'interruption (21-24), l'un des circuits de restriction. d'interruption (21-24) étant connecté entre la ligne d'interruption (1) et celle, correspondante, de chacune de la pluralité d'unités centrales de traitement (11-14), et les circuits de restriction d'interruption (21-24) étant chacun capable d'inhiber l'entrée des signaux d'interruption à l'une, correspondante, des unités centrales de traitement (11-14) pendant une certaine période de temps lorsque le nombre de signaux d'interruption reçus par cette unité centrale de traitement pendant une durée spécifiée dépasse un nombre fixé.

2. Circuit multiprocesseur selon la revendication 1, dans lequel le circuit de restriction d'interruption (21-24) comprend un compteur (31) destiné à compter le nombre de signaux d'interruption reçus par l'unité centrale de traitement (11-14), une minuterie (32) destinée à maintenir la durée de comptage du compteur (31), et un moyen d'inhibition d'entrée (33,34) destiné à inhiber l'entrée des signaux d'interruption à l'unité centrale de traitement (11-14) pendant une certaine période de temps lorsque le nombre compté par le compteur (31) dépasse un nombre fixé.

3. Circuit multiprocesseur selon la revendication 2, dans lequel le moyen d'inhibition d'entrée (33,34) comprend un circuit à retard (34) destiné à retarder l'entrée des signaux d'interruption provenant de la ligne d'interruption (1) pendant une certaine période de temps, et un circuit de commutation (33) destiné à commuter la connexion de la ligne d'interruption (1) au circuit à retard (34) lorsque la valeur comptée par le compteur (31) dépasse une valeur fixée.

4. Circuit multiprocesseur selon la revendication 1, dans lequel le circuit de restriction d'interruption (21-24) comprend un compteur (31) destiné à compter le nombre de signaux d'interruption reçus par l'unité centrale de traitement (11-14), un moyen d'inhibition d'entrée (33,34,40) destiné à inhiber l'entrée des signaux d'interruption à l'unité centrale de traitement (11-14) pendant une certaine période de temps lorsque le nombre compté par le compteur (31) dépasse un nombre fixé, et une minuterie (32) destinée à maintenir la durée de comptage du compteur (31) et à mettre hors service le moyen d'inhibition d'entrée (33,34).

5. Circuit multiprocesseur selon la revendication 4, dans lequel le moyen d'inhibition d'entrée comprend un circuit manipulateur (40) destiné à débloquer et à bloquer l'entrée à partir de la ligne d'interruption (1).

6. Circuit multiprocesseur selon la revendication 4, dans lequel le moyen d'inhibition d'entrée (33, 34, 40) comprend un circuit à retard (34) destiné à retarder l'entrée des signaux d'interruption provenant de la ligne d'interruption (1) pendant une certaine période de temps, et un circuit de commutation (33) destiné à commuter la connexion de la ligne d'interruption (1) au circuit à retard (34) lorsque la valeur comptée par le compteur (31) dépasse une valeur fixée.
